# EUROPÄISCHE PATENTSCHRIFT

(11) **EP 0 897 459 B1**
(45) Veröffentlichungstag und Bekanntmachung des Hinweises auf die Patenterteilung: **16.08.2001**
(21) Anmeldenummer: 97916388.8
(22) Anmeldetag: 26.03.1997
(51) Int. Cl.: F01D 11/02, F01D 11/00, F16J 15/32

(54) **BÜRSTENDICHTUNG**
BRUSH SEAL
JOINT A BROSSE

(30) Priorität: 08.05.1996 DE 19618475
(43) Veröffentlichungstag der Anmeldung: 24.02.1999
(73) Patentinhaber: MTU Aero Engines GmbH, 80995 München (DE)
(72) Erfinder: MAYR, Alfred, D-85244 Röhrmoos (DE)
(74) Vertreter: Einsele, Rolf W.
(86) Internationale Anmeldenummer: EP9701529
(87) Internationale Veröffentlichungsnummer: WO9742399

(56) Entgegenhaltungen:
- EP-A- 0 211 275
- WO-A-86/05252
- GB-A- 2 140 674
- US-A- 5 400 586
- US-A- 5 425 543
- US-A- 5 474 306

## Beschreibung

Die Erfindung bezieht sich auf eine Bürstendichtung zur Abdichtung zweier Räume unterschiedlichen Druckes zwischen einem Stator und einem Rotor einer Turbomaschine mit Borsten, die abgewinkelte Borstenabschnitte aufweisen, deren Enden gegen die Dichtfläche des Rotors laufen.

Eine Bürstendichtung der vorgenannten Bauart ist aus der US-A 54 74 306, Fig. 8, bekannt. Bei der vorbenannten Dichtung sind die Borsten in ihrem Abschnitt, mit dem sie in einer Halterung festgelegt sind, soweit gehalten, daß nur die abgewinkelten Borstenabschnitte elastisch verformbar sind. Insoweit kann die abgewinkelte Ausführung der Borsten nicht zu einem unterschiedlichen Biegeverhalten der Borsten gegenüber gerade ausgebildeten Bürstendichtungen führen.

Aus der GB-A 21 40 674 ist eine Bürstendichtung mit abgewinkelten Borsten bekannt, bei der beide Borstenabschnitte frei durchbiegbar sind. Hierdurch wird der Vorteil erreicht, daß die Steifigkeit der Borsten in Grenzen gehalten werden kann und dennoch geringe Auslenkung der Borsten bei entsprechender Bewegung der abzudichtenden Rotorfläche möglich ist.

Aufgabe der vorliegenden Erfindung es es, eine Bürstendichtung nach dem Oberbegriff des Patentanspruchs 1 zu schaffen, bei der die Steifigkeit der Borsten durch Einstellung der freien Biegelänge des Borstenabschnitts der in der Halterung der Bürstendichtung festgelegt ist, mit einfacher baulicher Änderung ermöglicht wird.

Diese Aufgabe wird gemäß der Erfindung dadurch gelöst, daß eine Halterung für die Borsten vorgesehen ist, welche quer zum Verlauf der Borsten wenigstens einen Anschlag aufweist, dessen Positionierung bezüglich des Abstandes (a) zu den abgebogenen Borstenabschnitten so eingestellt ist, daß eine gewünschte Federkennung der elastischen Borsten definiert wird. Für die Positionierung des Anschlags ist der Abstand (a) zu den abgebogenen Borstenabschnitten deshalb maßgeblich, weil dadurch die Entfernung von der Anlaufstelle der Borstenenden gegen die Dichtfläche des Rotors definiert ist.

Vorzugsweise sind die abgewinkelten Borstenabschnitte kürzer als die in einer Halterung festgelegten Schaftabschnitte der Borsten.

Vorteilhaft ist es, wenn die Halterung als Blechgehäuse ausgebildet ist und der Anschlag eine quer verlaufende Sicke im Blechgehäuse ist.

Alternativ zu der Ausbildung der Borstenfassung als Blechgehäuse mit Sicken kann als Anschlag auch eine Endkante der Halterung gewählt werden, an der unmittelbar die Borsten anliegen und die so die freie Biegelänge der Borsten bestimmt.

Insoweit Bürstendichtungen für die Abdichtung von Rotorstirnflächen eingesetzt werden sollen, ist eine erfindungsgemäße Dichtung dann von besonderem Vorteil, wenn bei der Abdichtung einer Rotorstimfläche wenig axialer Bauraum verfügbar ist. In diesem Fall ist die Bürstendichtung mit den rechtwinkelig abgebogenen Borstenabschnitten als Ringscheibendichtung ausgebildet, bei der die abgewinkelten Borstenenden gegen die Rotorstirnfläche laufen, während die Schaftabschnitte der Borsten im wesentlichen radial ausgerichtet sind.

Anhand der beigefügten Zeichnungen werden Ausführungsbeispiele der Erfindung erläutert. In den Zeichnungen zeigt:
- Fig. 1: einen Ausschnitt aus einer Turbomaschine im Bereich einer Dichtstelle mit Bürstendichtung im Axialschnitt,
- Fig. 1a: eine alternative Ausführungsform einer Bürstendichtung gemäß Fig. 1,
- Fig. 1b: die Bürstendichtung gemäß Fig. 1a bei radial ausgelenktem Borstenbündel,
- Fig. 2: die Einbaulage einer Bürstendichtung entsprechend Fig. 1 bis 1b bei Zusammenwirken mit einer stirnseitigen Dichtfläche eines Rotors.

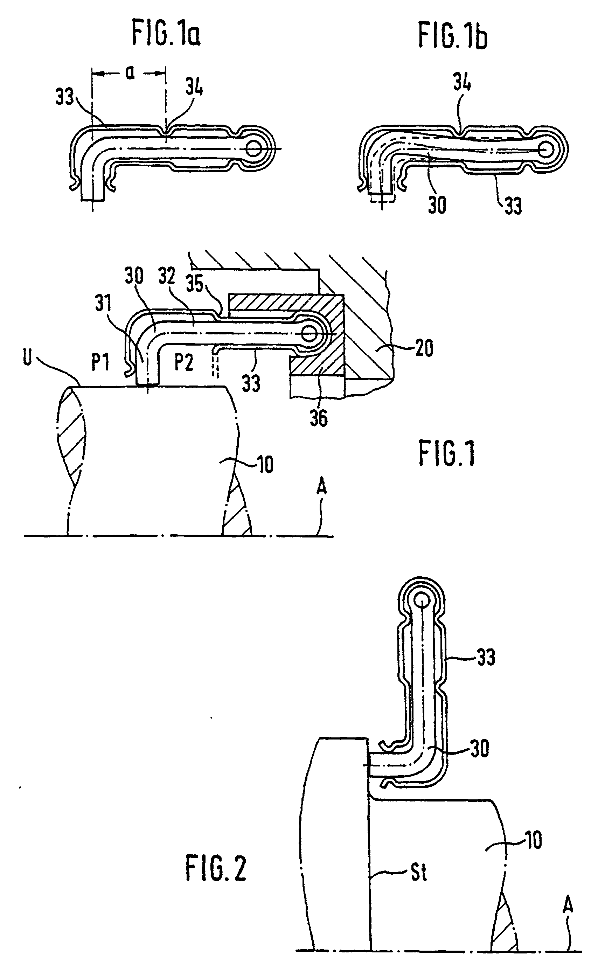

In dem in Fig. 1 dargestellten Ausschnitt aus einer Turbomaschine ist ein Rotor mit 10, ein Stator mit 20 bezeichnet. Mittels einer Bürstendichtung sind Räume unterschiedlichen Druckes P1, P2 zwischen Rotor 10 und Stator 20 abgedichtet. Die freien Enden der mit 30 bezeichneten Borsten der Bürstendichtung laufen gegen eine Umfangsfläche U des Rotors 10. Die Bürstendichtung ist in einem Haltering 36 festgelegt und mit diesem im Stator 20 positioniert. Die Borsten 30 der Bürstendichtung sind in etwa rechtwinklig abgewinkelt. Die Enden der abgewinkelten Borstenabschnitte 31 laufen gegen die Umfangsdichtfläche U des Rotors 10. Die Schaftabschnitte 32 der Borsten 30 sind in einer Halterung gefaßt, wobei diese Halterung im gezeigten Ausführungsbeispiel als Blechgehäuse 33 ausgebildet ist. Die Schaftabschnitte 32 der Borsten 30 sind länger als die abgewinkelten Borstenabschnitte 31. Quer zum Verlauf der Schaftabschnitte 32 der Borsten 30 ist am Blechgehäuse 33 ein Anschlag 35 vorgesehen, welcher als Biegekante wirkt, wenn die Borsten etwa infolge einer Exzentrizität des Rotors 10 in Radialrichtung ausgelenkt werden. Der Anschlag 35 kann als Sicke 34 im Blechgehäuse 33 ausgeführt sein, was in Fig. 1a dargestellt ist. Die Positionierung des Anschlags 35 bzw. der Sicke 34 am Blechgehäuse 33 ist so gewählt, daß der Abstand a (vergl. Fig. 1a) zu den abgebogenen Borstenabschnitten 32 der Bürstendichtung eine gewünschte Federkennung der elastischen Borsten 30 definiert.

Dadurch läßt sich die Steifigkeit der Borsten und deren Auflagedruck auf der Dichtfläche U des Rotors in Grenzen einstellen ohne daß hierdurch unzuläßig großer radialer Bauraum benötigt wird.

Die radiale Auslenkung der Borsten 30 und deren Abbiegung um die Sicke 34 ist in Fig. 1b dargestellt. Der Anschlag 35 für die Borsten 30 kann als Endkante des Blechgehäuses 33 ausgeführt sein. Bei der dargestellten Ausführungsform ist das Blechgehäuse 33 weiter nach vorne in Richtung der abgewinkelten Borstenabschnitte 31 vorgezogen, um den vorderen Teil der Borsten zu rühren und gegebenenfalls auch gegen eine aggressive Umgebung (Temperatur) zu schützen.

Die in Fig. 2 dargestellte Dichtstelle umfaßt eine Bürstendichtung der Bauform nach Fig. 1 a mit Blechgehäuse 33 und Borsten 30. Unterschiedlich zur Abdichtung nach Fig. 1 ist die radial ausgerichtete Dichtfläche, die als Stirnfläche St bezeichnet ist. Die abgewinkelten Borstenabschnitte 31 laufen gegen diese Stirnfläche St. Die Rotorachse des Rotors 10 ist mit A bezeichnet, wie auch in Fig. 1.

## Patentansprüche

1. Bürstendichtung zur Abdichtung zweier Räume unterschiedlichen Druckes (P1, P2) zwischen einem Stator (20) und einem Rotor (10) einer Turbomaschine mit Borsten (30), die abgewinkelte Borstenabschnitte (31) aufweisen, deren Enden gegen die Dichtfläche des Rotors (10) laufen, dadurch gekennzeichnet, daß eine Halterung für die Borsten (30) vorgesehen ist, welche quer zum Verlauf der Borsten wenigstens einen Anschlag (34, 35) aufweist, dessen Positionierung bezüglich des Abstandes (a) zu den abgebogenen Borstenabschnitten (32) so eingestellt ist, daß eine gewünschte Federkennung der elastischen Borsten (30) definiert wird.

2. Bürstendichtung nach Anspruch 1, dadurch gekennzeichnet, daß die abgewinkelten Borstenabschnitte (31) kürzer sind als die in einer Halterung festgelegten Schaftabschnitte (32) der Bosten (30).

3. Bürstendichtung nach Anspruch 1 oder 2, dadurch gekennzeichnet, daß die Halterung als Blechgehäuse (33) ausgebildet ist und der Anschlag eine quer verlaufende Sicke (34) im Blechgehäuse (33) ist.

4. Bürstendichtung nach Anspruch 1 oder 2, dadurch gekennzeichnet, daß der Anschlag eine Endkante (35) der Halterung ist.

5. Anwendung einer Bürstendichtung nach den Ansprüchen 1 bis 4 für die Abdichtung des Rotors einer Turbomaschine, dadurch gekennzeichnet, daß die Schaftabschnitte der Borsten (32) in Axialrichtung des Rotors (10) verlaufen und demgemäß die abgewinkelte Borstenabschnitte (31) in Radialrichtung.

## Claims

1. Brush seal for sealing two spaces at different pressures (P1, P2) between a stator (20) and a rotor (10) of a turbine machine, having bristles (30) with angled bristle sections (31) whose ends slide against the seal surface of the rotor (10),
**characterised in that**
a holder for the bristles (30) is provided, which has at least one abutment (34, 35) transverse to the extension of the bristles, whose position in terms of its distance (a) from the angled bristle sections (32) id adjusted so as to determine a desired springiness characteristic of the elastic bristles (30).

2. Brush seal according to Claim 1,
**characterised in that**
the angled bristle sections (31) are shorter than the shank sections (32) of the bristles (30) held in a holder.

3. Brush seal according to Claims 1 or 2,
**characterised in that**
the holder is formed as a sheet body (33) and the abutment is a bead (34) extending transversely within the sheet body (33).

4. Brush seal according to Claims 1 or 2,
**characterised in that**
the abutment is a rim at the end of the holder.

5. Use of a brush seal according to Claims 1 to 4 for sealing the rotor of a turbine machine,
**characterised in that**
the shank sections (32) of the bristles extend in the axial direction of the rotor (10) and, accordingly, the angled sections (31) of the bristles extend in the radial direction.

## Revendications

1. Joint d'étanchéité à soies pour assurer l'étanchéité entre deux enceintes, à pression (P1, P2) différente, entre un stator (20) et un rotor (10) d'une turbomachine, muni de soies (30) présentant des tronçons de soies (31) coudés, dont les extrémités défilent contre la surface d'étanchéité du rotor (10), caractérisé en ce qu'est prévue pour les soies (30) une fixation qui présente au moins une butée (34, 35), transversalement par rapport à la direction des soies, butée dont le positionnement par rapport à l'espacement (a), envers le tronçon de soies (32) coudé, est réglé à une valeur définissant une caractéristique élastique souhaitée de la part des soies (30) élastiques.

2. Joint d'étanchéité à soies selon la revendication 1, caractérisé en ce que les tronçons de soies (31) coudés sont plus courts que les tronçons de tige (32), fixés dans un dispositif de fixation, des soies (30).

3. Joint d'étanchéité à soies selon la revendication 1 ou 2, caractérisé en ce que le dispositif de fixation est réalisé sous la forme- d'un boîtier en tôle (33) et la butée est forme d'une moulure (34) s'étendant transversalement, ménagée dans le boîtier en tôle (33).

4. Joint d'étanchéité à soies selon la revendication 1 ou 2, caractérisé en ce que la butée est une arête d'extrémité (35) du dispositif de fixation.

5. Application d'un joint d'étanchéité à soies selon l'une quelconque des revendications 1 à 4, pour assurer l'étanchéité sur le rotor d'une turbomachine, caractérisée en ce que les tronçons de tige des soies (32) s'étendent dans la direction axiale du rotor (10) et, par conséquent, les tronçons de soies (31) coudés s'étendent dans la direction radiale.
